# EUROPEAN PATENT APPLICATION

(11) **EP 2 921 918 A1**
(43) Date of publication of application: **23.09.2015**
(21) Application number: 15155608.1
(22) Date of filing: 18.02.2015
(51) Int. Cl.: G05B 19/042

(54) **Smart field device for use in automation and control systems**

(30) Priority: 19.03.2014 IN KO03502014
(71) Applicant: Siemens Aktiengesellschaft, 80333 München (DE)
(72) Inventor: Buchstaller, Dominic, 91341 Röttenbach (DE); Sharma, Bharatkumar Ravishankar, 560076 Bangalore (IN); Vydyanathan, Nagavijayalaksh mi, 560034 Bangalore, Karnataka (IN)
(74) Representative: Isarpatent

(57) **Abstract**

The present invention provides a smart field device (100) for use in an automation and control system (300). According to the present invention, the field device (100) comprises a process interface module (106) for measuring and/or controlling process variables, a processing unit (102) and a memory (104) for storing a first set of instructions (114) and a second set of instructions (116). The processing unit (102) comprises a main processor (110) adapted to process the first set of instructions (114) and a co-processor (112) adapted to process the second set of instructions (116) substantially simultaneously with the main processor (110).

## Description

The present invention generally relates to the field of automation and control systems, and more particularly relates to smart field devices for use in the automation and control systems.

In industrial, infrastructure or facility based settings such as manufacturing industries, water treatment and distribution systems, oil and gas pipelines and building technologies (e.g., Heat, Ventilation and Air Conditioning system), automation and control systems are used to measure control process variables, and monitor and control operation of various equipments deployed therein. Typically, the control system performs these functions using field devices distributed at key locations within the premises and coupled to an automation controller via analog, digital or combined analog/digital buses. Thus, field devices are the devices involved in measurement, control and monitoring of processes. The field devices may include valves, valve positioners, switches, transmitters (e.g., temperature, pressure, and flow rate sensors) and the like.

The automation controllers are control devices which receive signals indicative of measurements made by the field devices and/or other information pertaining to the field devices such as health of the field devices, and execute a controller application to make process control decisions, and generate control signals based on received information. Additionally, the automation controllers communicate the control signals with the field devices to control operation of the various components in the industrial, infrastructure or facility settings.

Each field device is programmed with control programs in order to measure, monitor and control the various components. The control programs stored in the memory of the field device is typically executed by a central processing unit (CPU) with a single or multiple processing cores. Normally, the control programs executed on the field device are simple and not computationally complex. Hence, the field device does not required high processing power to execute the computing programs as complex control decisions that involve executing computationally complex control programs are typically executed at the automation controller.

The automation controller is connected to multiple field devices and the latency involved in making control decisions for each of the field devices can be higher as compared to a scenario where respective field device make certain control decisions locally. For example, in a smart grid network, phasor measurement units measure instantaneous current and voltages and transmit the measured data to the automation controller. The automation controller executes computationally complex control programs to detect transient instabilities, grid emergencies, provide dynamic control of line impedance and voltage, ultra-fast load flow analysis, etc. This may lead to greater amount of latency compared to a scenario where the phasor measurement units can take certain control decisions autonomously.

In order to take control decisions at the field device, computationally complex control programs needs to executed at the field device. However, the CPU in the field device currently fails to execute the computationally complex control programs within required real time latency constraints (e.g., in order of hundreds of microseconds to few milliseconds). Additionally, the processor is involved in carrying out routine real time tasks such as data acquisition, sending process information, receiving control signals, running an operating system and so on.

In light of the foregoing, there is a need for a smart field device for use in the automation and control system which can handle computationally complex control programs as well as routine real time tasks.

It is therefore the object of the present invention to provide a smart field device with a processing unit comprising a main processor for handling routine real time tasks and a co-processor for handling computationally complex control programs with desired real time latency constraints.

The above object is achieved by providing a smart field device for use in an automation and control system. The field device comprises a process interface module and a processing unit coupled to the process interface module. The process interface module may be sensor, valve, transmitter, transducer, etc. adapted for measuring or controlling process variables associated with an industrial, infrastructure or facility setting. The process variables may include flow, temperature, pressure and the so on. The processing unit comprises a main processor adapted for processing a first set of instructions and a co-processor adapted for processing a second set of instructions. The first set of instructions is associated with routine real time tasks required for operating the field device. The second set of instructions is associated with computation complex control programs that need to be executed for processing the process variables. Thus, the processing unit can handle computationally complex instructions along with routine real time tasks within required latency constraints (e.g., hundreds of microseconds or a few milliseconds latency). Advantageously, the field device of the present invention is computationally advanced compared to conventional field devices. Alternatively, the first set of instructions and the second set of instructions belongs to computationally complex control programs.

Therein, the main processor is a central processing unit with at least one processing core. The co-processor is a low power processor with multiple processing cores. For example, the low power processor may be a low power embedded graphical processing unit (GPU) or a low power accelerator. Thus, the low power processor with multiple processing cores can assist the main processor to execute complex computer programs such as bank of Kalman filters in real time within required latency constraints using multiple processing cores. Advantageously, the low power processor provides high energy efficiency (i.e., improved performance per watt of power consumed by the low power processor).

In an embodiment, the co-processor is coupled to the main processor via an interconnect interface. For example, the interconnect interface may include a Peripheral Component Interconnect (PCI) express bus. Advantageously, the co-processor can be easily connected to the main processor in the field bus of existing automation and control system. In another embodiment, the main processor and the co-processor are embedded on a single chip. Thus, communication between the main processor and the co-processor is on-chip and faster, thereby improving overall performance of the automation and control system.

Therein, the main processor is adapted to process the first set of instructions concurrently with the co-processor processing the second set of instructions. Thus, the main processor can continue to perform routine real time task while the co-processor processes computationally complex instructions. Alternatively, the main processor may remain idle while the co-processor processes the second set of instructions.

Therein, the field device further comprises a memory for storing the first set of instructions and the second set of instructions. Thus, the main processor and the co-processor can access the first set of instructions and the second set of instructions from the memory. Alternatively, the first set of instructions and the second set of instructions may be stored in memory of the main processor.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: illustrates a block diagram of an exemplary smart field device according to an embodiment of the present invention.
- FIG 2A: is a diagrammatic representation of a processing unit of the smart field device as shown in FIG 1 according to an embodiment of present invention.
- FIG 2B: is a diagrammatic representation of the processing unit of the smart field device as shown in FIG 1 according to another embodiment of present invention.
- FIG 3: illustrates a block diagram of an exemplary automation and control system employing field devices as shown in FIG 1 according to an embodiment of the present invention.
- FIG 4: is a process flowchart illustrating an exemplary method of processing process information using a co-processor according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

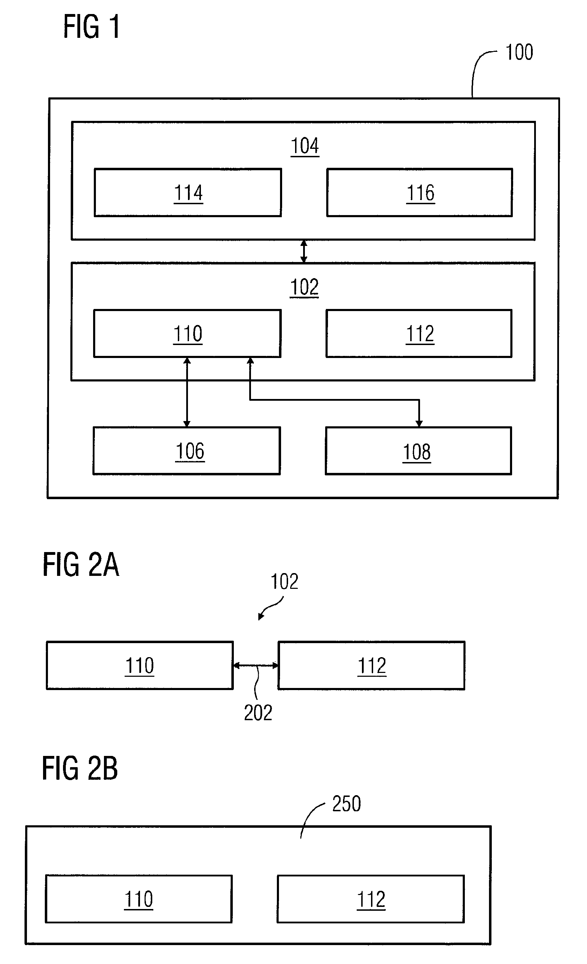

FIG 1 illustrates a block diagram of an exemplary field device 100 according to an embodiment of the present invention. The field device 100 may be a smart field device such as Fieldbus field device and HART field device. The smart field device 100 may be valves, valve positioners, switches and transmitters (e.g., temperature, pressure and flow rate sensors, current and voltage sensors (phasor measurement units)), digital protective relays, HVAC field devices, facility explorer devices and the like.

The field device 100 comprises a processing unit 102, a memory 104, a process interface module 106 and a communication interface 108. The process interface module 106 is configured for measuring and/or controlling process variables in an industrial, infrastructure or facility settings. For example, the process interface module 106 may include valve, sensor, transmitter, transducer, and the like. Exemplary process variables may include flow, pressure, temperature, level, etc. The processing unit 102 comprises a main processor 110 and a co-processor 112. The main processor 110 may be a central processing unit (CPU). In one embodiment, the main processor 110 may be a CPU with single processing core. In another embodiment, the main processor 110 may be a CPU with multiple processing cores. The co-processor 112 may be a low power processor with a plurality of processing cores. In an exemplary implementation, the co-processor 112 may be a low power embedded graphical processing unit with multiple processing cores. In another exemplary implementation, the co-processor 112 may be a low power accelerator with multiple processing cores. In one embodiment, the co-processor 110 is connected to the main processor 110 via an interconnect interface 202 as shown in FIG 2A. For example, the interconnect interface 202 may be a Peripheral Component Interconnect (PCI) express bus. It is understood that, the Interconnect interface 202 may be any other type of interface which enables to connect the main processor 110 and the co-processor 112. In another embodiment, the co-processor 112 and the main processor 110 are embedded on a single chip 250 as shown in FIG 2B.

The memory 104 comprises a first set of instructions 114 and a second set of instructions 116. The first set of instructions 114 may be a program for performing routine real time tasks such as running an operating system, acquiring process information, sending the process information to the co-processor 112, preparing for processing the second set of instructions 116 and so on. The second set of instructions 116 may be a control program for performing computationally intensive computations to process the process information. In another embodiment, the first set of instructions and the second set of instructions are part of computationally complex control programs. Although, the memory 104 is illustrated to store the first set of instructions 114 and the second set of instructions 116, the first set of instructions 114 and the second set of instructions 116 may be stored in memory of the main processor 110 and/or the co-processor 112.

During the normal operation of the field device 100, the main processor 110 executes the first set of instructions 114 to operate the field device 100 and perform other routine real time tasks. Similarly, the co-processor 112 processes the second set of instructions to perform computationally intensive computations to control process functions. For example, the main processor 110 determines that the process information including the process variables is required to be processed and provides the process information to the co-processor 112 via the interconnect interface 202. It can be noted that, when the main processor 110 and the co-processor 112 are embedded on same chip, the co-processor 112 fetches the process information from memory of the main processor 110. Accordingly, the co-processor 112 executes the second set of instructions 116 based on the process information and generates results of execution. Wherein the first set of instructions and the second set of instructions belong to a computationally complex control program, the main processor 110 executes the first set of instructions and the co-processor 112 executes a second set of instructions.

In some embodiments, the co-processor 112 uses the plurality of processing cores to execute the second set of instructions in a multi-threaded manner. Simultaneously, the main processor 110 executes the first set of instructions 114. This is possible since kernel launches on the co-processor 112 are asynchronous in nature. However, it is possible that the first set of instructions and the second set of instructions are executed sequentially by the main processor 110 and the co-processor 112 respectively.

Once the second set of instructions is executed, the main processor 110 accesses the results of execution from the memory of the co-processor 112 and stores the results in the memory 112. The main processor 110 may provide the results of execution to a control device (e.g., an automation controller) in the control system via the communication interface 108. The communication of the results of execution may be made transmitted via a wired or a wireless communication means. The control device may generate and transmit a control signal to the field device 100 using the results of execution. Accordingly, the main processor 110 controls the process function (e.g., opening and closing of valve) using the process interface element 106 based on the control signal. In another embodiment, the main processor 110 may directly control the process function using the process interface element 106 based on the results of execution. Alternatively, both main processor 110 and the co-processor 112 may control the respective process function using the process interface element 106 based on the results of execution.

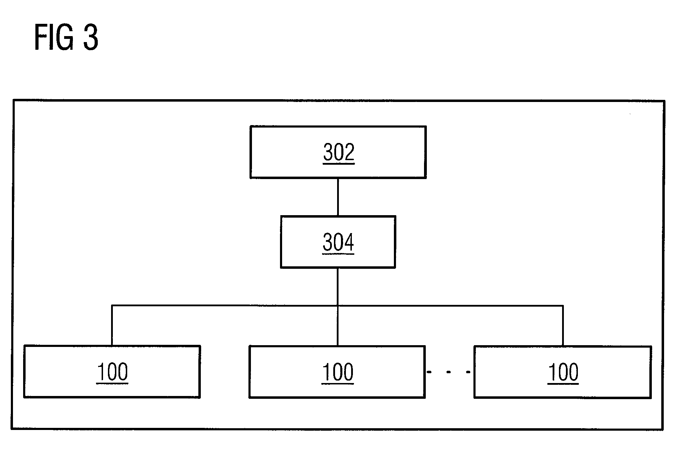

FIG 3 illustrates a block diagram of an exemplary automation and control system 300 employing field devices of FIG 1 according to an embodiment of the present invention. The automation and control system 300 comprises a control device 302, the field devices 100 and an input/output (I/O) module 304. Each of the field devices 100 is connected to the control device 302 via the I/O module 304. The control device 302 may be an automation controller such as a programmable logic controller (PLC), Programmable automation controller (PAC), Robot Controller (RC), Motion Controller (MC) configured for controlling the field devices 100. The I/O module 304 may be Fieldbus or HART interface. Although not illustrated in FIG 3, the automation and control system 300 may comprise a plurality of control devices 302, each control device 302 connected to one or more field devices 100. Also, the control device 302 may be connected to a host device via an Ethernet link.

Each of the field devices 100 executes the first set of instructions 114 using the main processor 110 and the second set of instructions 116 using the co-processor 112 in conjunction with execution of control algorithms by the control device 302 to implement process control in the industrial, infrastructure or facility settings.

Consider that a smart grid network employs the automation and control system 300. Also, consider that phasor measurement units are deployed as field devices 100. The phasor measurement units 100 in the automation and control system 300 measure instantaneous current and voltage values. According to the present invention, rather than transmitting measurement values to the control device 302, each phasor measurement unit 100 executes phasor measurement analysis routines and computationally complex advanced power control programs using the main processor 110 and the co-processor 112. Thus, said each phasor measurement unit 100 can detect transient instabilities, grid emergencies, provide dynamic control of line impedance and instantaneous and autonomous control of line flow and voltage, ultra-fast low flow analysis, etc. without waiting for control decisions to arrive from the control device 302. In some embodiments, the phasor measurement units 100 may still transmit the measured values to the control device 302 to take some global control decisions.

Although, in the automation and control system 300 of FIG 3, the field devices 100 are connected to the control device 302 via the I/O module 304, one skilled in the art can envision that the field devices 100 can be connected in a peer to peer (P2P) network topology. In P2P network topology, the field devices 100 execute distributed control programs to make a control decision. Such a network topology can be implemented in distributed intelligent agent based control systems such as dynamic distributed power control systems, distributed fault detection, correction and outage management systems and so on.

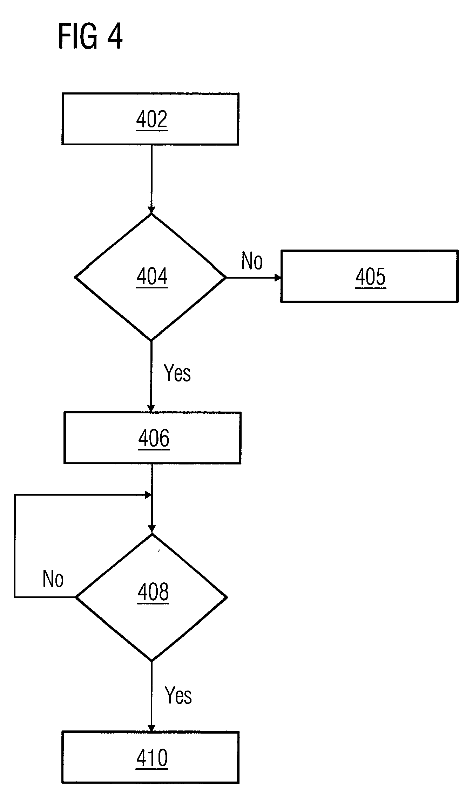

FIG 4 is a process flowchart 100 illustrating an exemplary method of executing the second set of instructions 116 on the co-processor 112 according to an embodiment of the present invention. At step 402, process information is received from the process interface module 106. At step 404, it is determined whether the co-processor 112 is required to process the process information. In other words, it is determined whether processing power required to process the process information is greater than the processing power of the main processor 110. If the co-processor 112 is to be used to process the process information, then at step 406, the process information is provided to the co-processor 112. Accordingly, the process information is partly processed by the main processor 110 using the first set of instructions and a part of process information is processed by the co-processor 112 using the second set of instructions 116. In some embodiments, the co-processor 112 executes the second set of instructions using the multiple processing cores.

If the co-processor 112 is not required to entirely process the process information, the process information is entirely processed by the main processor 110 by executing the first set of instructions 114, at step 405. It can be noted that, the co-processor 112 may entirely process the process information using the second set of instructions especially when the computationally complex control program is composed of the second set of instructions and the first set of instructions belong to real time routing tasks.

At step 408, it is determined whether the part of process information is processed successfully by the co-processor 112. If the part of process information is successfully processed, then at step 410, results obtained after processing the process information is retrieved from the memory of the co-processor 112. If the process information is not successfully processed, then the process is routed to step 408.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A field device (100) for use in a control system (300) comprising:
a process interface module (106); and
a processing unit (102) coupled to the process interface module (106), **characterized in that** the processing unit is provided with:
a main processor (110) adapted for processing a first set of instructions (114); and
at least one co-processor (112)adapted for processing a second set of instructions (116).

2. Field device according to claim 1, wherein the main processor (110) comprises a central processing unit (CPU) with at least one processing core.

3. Field device according to any of the preceding claims, wherein the co-processor (112) comprises a low power processor with multiple processing cores.

4. Field device according to any of the preceding claims, wherein the co-processor (112) is coupled to the main processor (110) via an interconnect interface (202).

5. Field device according to any of the preceding claims, wherein the main processor (110) and the co-processor (112) are embedded on a single chip (250).

6. Field device according to any of the preceding claims, wherein the main processor (110) is adapted to process the first set of instructions (114) concurrently with the co-processor (112) processing the second set of instructions (116).

7. Field device according to any of the preceding claims, wherein the second set of instructions (116) is associated with computationally complex control programs.

8. Field device according to any of the preceding claims, wherein the first set of instructions and the second set of instructions (116) are associated with computationally complex control program.

9. Field device according to any of the preceding claims, further comprising a memory (104) adapted for storing the first set of instructions (114) and the second set of instructions (116).
